# EUROPÄISCHE PATENTSCHRIFT

(11) **EP 3 830 688 B1**
(45) Veröffentlichungstag und Bekanntmachung des Hinweises auf die Patenterteilung: **14.12.2022**
(21) Anmeldenummer: 19742186.0
(22) Anmeldetag: 17.07.2019
(51) Int. Cl.: G06F 8/65

(54) **AKTUALISIERUNG EINES HAUSGERÄTS**
UPDATING OF A DOMESTIC APPLIANCE
MISE À JOUR D'UN APPAREIL MÉNAGER

(30) Priorität: 31.07.2018 DE 102018212726
(43) Veröffentlichungstag der Anmeldung: 09.06.2021
(73) Patentinhaber: BSH Hausgeräte GmbH, 81739 München (DE)
(72) Erfinder: RICHER, Thomas, 81541 München (DE); UNTERREINER, Fabian, 81825 München (DE)
(86) Internationale Anmeldenummer: PCT/EP2019/069218
(87) Internationale Veröffentlichungsnummer: WO 2020/025318

(56) Entgegenhaltungen:
- DE-A1-102009 018 761

## Beschreibung

Die Erfindung betrifft die Aktualisierung eines Hausgeräts. Insbesondere betrifft die Erfindung die Aktualisierung eines Hausgeräts mit mehreren Komponenten, die in unterschiedlichen Konfigurationen vorliegen können.

Ein Hausgerät umfasst mehrere Komponenten, von denen wenigstens eine als Steuervorrichtung ausgebildet ist, die eine Kombination aus Hardware und Software darstellt. Eine solche Komponente kann aktualisiert werden, indem neue Software hinzugefügt oder bestehende Software verändert oder entfernt wird. So können beispielsweise ein fehlerhaftes Steuerprogramm korrigiert oder eine neue Funktion hinzugefügt werden. Das Hausgerät ist bevorzugt in Serie herstellbar, wobei unterschiedliche Ausführungsformen des Hausgeräts in der gleichen Serie gefertigt werden können. Beispielsweise kann ein Teil der hergestellten Hausgeräte mit einer ersten Komponente ausgestattet werden und ein anderer Teil mit einer anderen. Dies kann beispielsweise erforderlich sein, wenn die erste Komponente nicht mehr in Stückzahlen verfügbar ist oder die zweite Komponente als eine verbesserte Alternative gefunden wurde. Außerdem können unterschiedliche Varianten gefertigt werden, von denen beispielsweise eine über eine vorbestimmte Komponente verfügt und eine andere nicht. Eine solche Komponente kann auch erst zu einem späteren Zeitpunkt dem Hausgerät hinzugefügt werden, entweder durch ein Servicepersonal oder durch einen Benutzer. Über diese Variationen kann das Hausgerät in einer Vielzahl unterschiedlicher Konfigurationen vorliegen.

Für eine Aktualisierung der Steuervorrichtung muss sichergestellt werden, dass die aktualisierte Steuervorrichtung mit der bestehenden Konfiguration kompatibel ist. Durch diese Bedingung kann das Bereitstellen von generischen Aktualisierungsinformationen für eine Vielzahl unterschiedlich ausgeführter, aber grundsätzlich vergleichbarer Hausgeräte schwierig sein.

DE 10 2009 018 761 A1 offenbart die Aktualisierung von Softwarekomponenten in einem Kraftfahrzeug in Abhängigkeit von einer aktuell ermittelten Fahrzeugkonfigurationsinformation.

US 2017 0 329 596 A1 schlägt vor, Aktualisierungsinformationen bereitzustellen, die eine Vielzahl Aktualisierungen für Komponenten des Hausgeräts umfassen, um dann anhand einer Konfiguration des Hausgeräts zu entscheiden, welche der Aktualisierungen durchgeführt werden sollen.

Eine der vorliegenden Erfindung zu Grunde liegende Aufgabe besteht in der Angabe einer verbesserten Technik, um ein Hausgerät, das in einer Vielzahl verschiedener Konfigurationen vorliegen kann, mittels möglichst generischer Aktualisierungsinformationen zu aktualisieren. Die Erfindung löst diese Aufgabe mittels der Gegenstände der unabhängigen Ansprüche. Unteransprüche geben bevorzugte Ausführungsformen wieder.

Ein erster Aspekt der vorliegenden Erfindung umfasst ein Verfahren zum Aktualisieren eines Hausgeräts gemäß Anspruch 1.

Die Komponenten des Hausgeräts können aktiv oder passiv sein. Eine aktive Komponente kann bevorzugt kommunizieren, sodass ihr Zustand dynamisch bestimmt werden kann. Eine passive Komponente kann eine beliebige Einrichtung umfassen.

Die Beschränkung kann angeben, für welche Konfigurationen die Aktualisierungsinformationen geeignet sind. Durch das Einschließen des Attributs in die Konfiguration kann verhindert werden, dass eine Aktualisierung an einer Komponente scheitert, deren Zustand nicht dynamisch bestimmt werden kann. Beispielsweise kann eine Aktualisierung eines WLAN-Moduls die Unterstützung eines neuen Protokolls umfassen. Dazu kann geprüft werden, ob das im Hausgerät angebrachte Modul über ausreichend Verarbeitungsressourcen für das Protokoll verfügt und ob eine Treiberstufe in der Lage ist, die dem Protokoll zugeordneten Frequenzen zu verarbeiten. Der Zustand des Moduls und seiner Treiberstufe können insbesondere durch Abfragen des Moduls bestimmt werden. Allerdings kann das neue Protokoll Frequenzen verwenden, für die eine bestimmte Antenne erforderlich ist, die nur in einem Teil einer Serie von Hausgeräten verbaut ist. Andere verbaute Antennen können für die Frequenzen nicht oder nur schlecht geeignet sein. Eine Spezifikation der Antenne ist dem Modul aber unter Umständen nicht bekannt. Es wird daher vorgeschlagen, ein Attribut, das im vorliegenden Fall auf die Verwendbarkeit der Antenne des Hausgeräts für die fraglichen Frequenzen betrifft, auf der Basis einer Identifikation des Hausgeräts zu bestimmen. Dazu kann insbesondere eine Datenbank mit Identifikationen von Hausgeräten und im Hausgerät verbauten Elementen geführt werden. Ein Attribut kann auf der Basis von in der Datenbank gespeicherten Informationen gebildet und optional in der Datenbank abgelegt werden.

Dadurch kann es leichter sein, generische Aktualisierungsinformationen für eine Vielzahl unterschiedlich konfigurierter oder ausgestatteter Hausgeräte bereitzustellen. Eine Anzahl von Hausgeräten, die beispielsweise aus wirtschaftlichen Gründen bei Aktualisierungsinformationen nicht berücksichtigt werden, kann verringert sein.

Die Beschränkung kann eine Vielzahl Konfigurationen umfassen. In einer Variante kann die Beschränkung eine Liste von Konfigurationen umfassen, für die die Aktualisierungsinformationen zugelassen sind. Alternativ kann auch eine Liste von nicht zugelassenen Konfigurationen geführt werden. Zugelassene oder nicht zugelassene Konfigurationen können auch parametrisch ausgedrückt sein. In wieder einer anderen Ausführungsform kann die Beschränkung ein Verfahren umfassen, das bestimmt, ob ein gegebenes Hausgerät eine zugelassene Konfiguration aufweist oder nicht. Die Aktualisierungsinformationen können einer Vielzahl Hausgeräten zugeordnet sein, beispielsweise allen Hausgeräten eines vorbestimmten Typs, optional eingeschränkt auf eine vorbestimmte Serie oder Teilserie, einen vorbestimmten Produktionszeitraum oder eine vorbestimmte Ausstattung.

Das Attribut kann üblicherweise von keiner Komponente des Hausgeräts dynamisch bestimmt werden. Das dem Attribut zugeordnete Element kann passiv sein, indem es nicht elektronisch mittels eines Kommunikationsprotokolls kommunizieren kann. Allerdings kann es durch eine aktive, kommunikationsfähige Komponente gesteuert werden.

Das Attribut kann insbesondere eine Existenz, eine Variante, ein Baumuster, eine Ausführungsform oder eine Fähigkeit einer Komponente des Hausgeräts umfassen. Beispielsweise kann das Attribut die Bauart eines Lagers umfassen, das in einer ersten Version als Gleitlager und in einer zweiten Version als Wälzlager ausgeführt ist. Eine bestimmte Aktualisierung kann nur dann durchgeführt werden, wenn das Lager in der zweiten Version vorliegt, beispielsweise weil die Aktualisierung das Lager stärker beanspruchen kann, sodass das Gleitlager langfristig überfordert sein kann. Das Attribut kann auch beispielsweise ein Material einer Komponente oder ein Datum der Produktion, der Lieferung oder des Einbaus der Komponente umfassen.

Das der Identifikation zugeordnete Attribut kann geändert werden. Die Änderung kann beispielsweise durch Austausch einer schadhaften, verschlissenen oder veralteten Komponente erfolgen. Dabei kann ein Hinweis auf die angebrachte Komponente einer Identifikation des Hausgeräts zugeordnet werden. Der Hinweis kann insbesondere in der oben erwähnten Datenbank hinterlegt werden. Alternativ kann der Hinweis auch in elektronischer Form am Hausgerät gespeichert werden. Zur Bestimmung eines Attributs kann neben der Identifikation des Hausgeräts auch eine Historie von Serviceeingriffen verwendet werden.

Der Zustand kann eine Existenz, Ausführung, Einstellung oder Version von Steuerinformationen der Komponente umfassen. Eine solche Komponente kann mittels eines Kommunikationsprotokolls kommunizieren und wird daher als aktiv betrachtet. Praktisch jede über das Protokoll bestimmbare Einstellung kann zur Bestimmung des Zustands verwendet werden.

In einer ersten Variante umfassen die Aktualisierungsinformationen ein Anwendungsprogramm ("application") für eine Komponente des Hausgeräts umfassen. Ein Anwendungsprogramm kann beispielsweise für die Durchführung einer optionalen Funktion vorgesehen sein. Das Anwendungsprogramm kann auch eine Einstellung umfassen, die ebenfalls aktualisiert werden kann.

In einer zweiten Variante umfassen die Aktualisierungsinformationen ein eingebettetes Programm ("firmware") einer Komponente des Hausgeräts. Ein solches Programm ist üblicherweise fest mit der Komponente verbunden und kann in einem besonderen Speicher abgelegt sein, der seinen Inhalt auch stromlos konserviert, beispielsweise in einem ROM, (E)EPROM oder Flash-Speicher. Durch einen Anwender ist ein solches Programm üblicherweise nicht oder nur mit speziellen Mitteln bzw. Funktionen austauschbar. Eine Änderung der Firmware kann heikel sein, weil bei einem Fehler eine Kommunikationsfähigkeit der Komponente beschädigt werden kann, die für eine weitere Änderung erforderlich ist.

Ein zweiter Aspekt der vorliegenden Erfindung umfasst eine Steuereinrichtung für ein Hausgerät mit einer oder mehreren Komponenten gemäß Anspruch 9.

Ein dritter Aspekt der vorliegenden Erfindung umfasst einen Update-Server gemäß Anspruch 10.

Eine hierin beschriebene Steuereinrichtung und/oder ein hierin beschriebener Update-Server können verwendet werden, um ein hierin beschriebenes Verfahren ganz oder in Teilen durchzuführen. Dabei kann eine der Verarbeitungseinrichtungen einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Steuereinrichtung oder den Update-Server übertragen werden und umgekehrt.

Die Bestimmung der Konfiguration kann in einer Variante einer hierin beschriebenen Technik seitens des Hausgeräts, insbesondere seitens der Steuereinrichtung erfolgen. In einer anderen Variante kann die Konfiguration seitens des Update-Servers, insbesondere seitens dessen Verarbeitungseinrichtung bestimmt werden. In beiden Fällen können Informationen von Komponenten des Hausgeräts mittels eines Kommunikationsprotokolls gesammelt und verarbeitet werden. Die Erfüllung der Beschränkung kann in beiden Fällen alternativ seitens des Hausgeräts oder seitens des Update-Servers überprüft werden.

Die Erfindung wird nun unter Bezug auf die beiliegenden Figuren genauer beschrieben, in denen:
- Figur 1: ein beispielhaftes System mit einem Hausgerät und einer entfernten Stelle;
- Figur 3: eine Illustration eines Aktualisierungsvorgangs; und

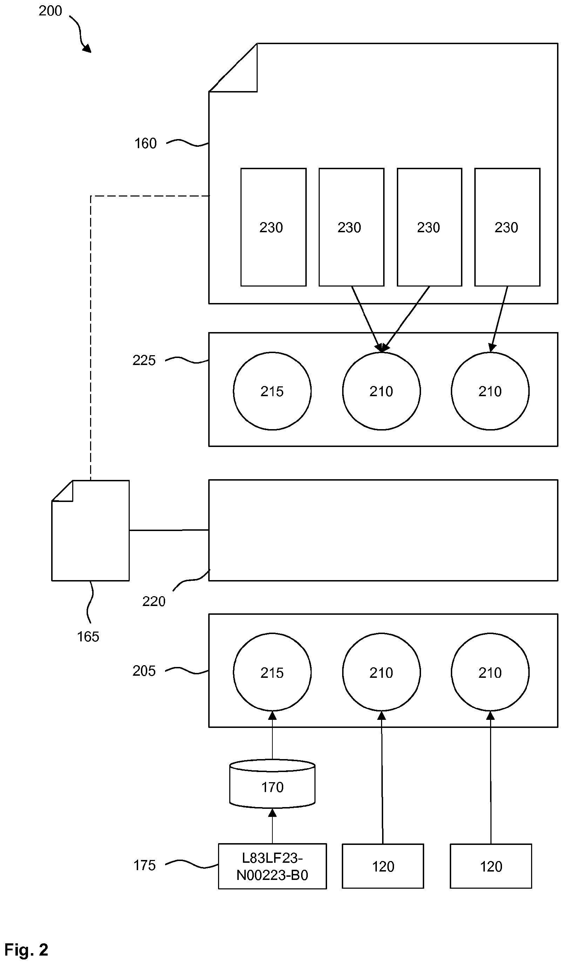

- Figur 2: ein Ablaufdiagramm eines beispielhaften Verfahrens
darstellt.

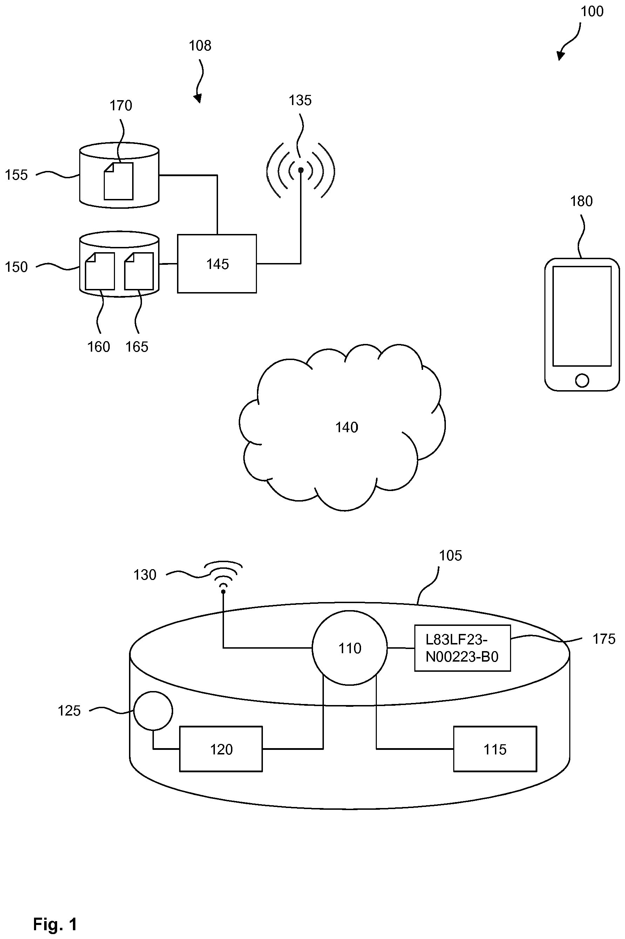

Figur 1 zeigt ein beispielhaftes System 100 mit einem Hausgerät 105 und einer entfernten Stelle 108. Das Hausgerät 105 kann beispielsweise eine Bodenbearbeitungsmaschine wie einen Staubsaugroboter oder einen automatischen Rasenschneider umfassen. In einer anderen Ausführungsform umfasst das Hausgerät 105 ein Küchengerät. Das Hausgerät 105 umfasst eine Verarbeitungseinrichtung 110 und eine oder mehrere Komponenten. Eine erste beispielhafte Komponente 115 ist eine aktive Komponente, indem sie kommunikativ mit der Verarbeitungseinrichtung 110 verbunden ist. Die Verarbeitungseinrichtung 110 kann insbesondere einen Zustand der aktiven ersten Komponente 115 bestimmen, indem sie den Zustand oder einen Hinweis auf den Zustand von der Komponente 115 abfragt. Im Rahmen der vorliegenden Erläuterung kann die Verarbeitungseinrichtung 110 auch als Komponente des Hausgeräts 105 gelten.

Eine zweite beispielhafte Komponente 120 ist ebenfalls aktiv und zur Steuerung einer dritten Komponente 125 eingerichtet, die passiv ist. Eine passive Komponente kann zwar durch eine andere Komponente steuerbar sein und optional auch einen Sensor zur Bereitstellung eines Werts an die andere Komponente umfassen, ist aber nicht zur Kommunikation eingerichtet. Das bedeutet üblicherweise, dass eine passive Komponente 125 keine Nachricht empfangen und eine differenzierte Antwort auf die Nachricht bereitstellen kann. Insbesondere ist kein Kommunikationsprotokoll mit der passiven Komponente 125 bereitgestellt. Üblicherweise verfügt die passive Komponente 125 über keine Steuervorrichtung in Form eines Mikrocomputers oder Mikroprozessors. Eine passive Komponente 125 kann auch direkt von der Verarbeitungseinrichtung 110 gesteuert werden. Die passive Komponente 125 kann auch ohne sensorischen oder aktorischen Anschluss an die Verarbeitungseinrichtung 110 oder eine der Komponenten 115, 120 vorgesehen sein. So kann die passive Komponente auch beispielsweise ein Gehäuse, ein Lager oder einen Behälter umfassen. Die Art und Weise, wie die passive Komponente 115 ausgebildet ist oder in welchem Zustand sie sich befindet, kann jedoch eine Auswirkung auf eine Funktion haben, die mittels der Verarbeitungseinrichtung 110 oder einer der Komponenten 115, 120 erbracht werden kann. Insbesondere kann ein Attribut der passiven Komponente 115 inkompatibel oder nicht empfohlen für eine Funktion mit einem Programm sein, das auf die Steuervorrichtung 110 oder eine der Komponenten 115, 120 geladen werden kann.

Die Verarbeitungseinrichtung 110 ist bevorzugt mit einer Kommunikationseinrichtung 130 zur Verbindung mit der entfernten Stelle 108 verbunden. Die entfernte Stelle 108 umfasst eine korrespondierende Kommunikationseinrichtung 135, sodass eine Kommunikation über eine Verbindung 140 erfolgen kann, die einen Abschnitt eines Kommunikationsnetzwerks umfassen kann. Dadurch kann die entfernte Stelle 108 an einem beliebigen Ort angebracht sein oder auch abstrahiert vom Ort als Dienst in einer Cloud realisiert sein. die Kommunikationseinrichtung 130 kann ebenfalls als aktive oder passive Komponente des Hausgeräts 105 zählen.

Die entfernte Stelle 108 umfasst eine Verarbeitungseinrichtung 145, einen ersten Datenspeicher 150 und einen optionalen zweiten Datenspeicher 155. Der erste Datenspeicher 150 ist zur Ablauge von Aktualisierungsinformationen 160 eingerichtet, die dazu verwendet werden können, ein Programm oder einen Parameter der Verarbeitungseinrichtung 110 oder einer der Komponenten 115, 120 zu aktualisieren. Dadurch kann eine bestehende Funktion verändert, erweitert oder entfernt werden. Der zweite Datenspeicher 155 umfasst bevorzugt eine Zuordnungstabelle 170, die dazu eingerichtet ist, einer bevorzugt eindeutigen Identifikation 175 eines Hausgeräts 105 eine oder mehrere Informationen zuzuordnen. Ob die Aktualisierungsinformationen 160 für ein bestimmtes Hausgerät 105 anwendbar ist oder nicht kann in einer Beschränkung 165 festgehalten sein.

Zur Aktualisierung des Hausgeräts 105 wird vorgeschlagen, eine Konfiguration des Hausgeräts 105 in Form von Zuständen wenigstens einer Komponente 115, 120 zu bestimmen. Außerdem kann auf der Basis der Identifikation 175, etwa mithilfe der Zuordnungstabelle 170, ein Attribut einer Komponente 115-125 des Hausgeräts 105 bestimmt werden, das ebenfalls in den bestimmten Zustand einfließen kann. Auf der Basis der bestimmten Konfiguration kann dann bestimmt werden, ob die Aktualisierungsinformationen 160 zur Anwendung am Hausgerät 105 geeignet sind. Ist dies der Fall, so können eine oder mehrere Komponenten 115, 120 oder die Verarbeitungseinrichtung 110 aktualisiert werden. Die Aktualisierung kann durch eine Person initiiert oder gesteuert werden, wozu ein weiteres Gerät 180 vorgesehen sein kann, das vorliegend beispielhaft als Smartphone ausgeführt ist und kommunikativ mit dem Hausgerät 105 und/oder der entfernten Stelle 108 verbunden sein kann.

Figur 2 zeigt eine Illustration eines Aktualisierungsvorgangs 200. Eine bestehende Konfiguration 205 des Hausgeräts 105 kann bestimmt werden, indem ein Zustand 210 einer Komponente 110, 115, 120 dynamisch bestimmt wird. Außerdem kann ein Attribut 215 einer Komponente 110 - 125 bestimmt werden und einen weiteren Teil der bestehenden Konfiguration 205 bilden. Zur Bestimmung des Attributs 215 kann die Identifikation 175 als Schlüssel für die Zuordnungstabelle 170 verwendet werden, um Informationen, die dem Hausgerät 105 zugeordnet sind, zu bestimmen. Auf der Basis dieser Informationen kann dann das Attribut 215 bestimmt werden. Die Zuordnungstabelle 170 kann auf der Basis von Unterlagen eines Herstellers des Hausgeräts 105 erstellt werden. Insbesondere können Informationen über verbaute Komponenten 110 - 130 in der Zuordnungstabelle 170 hinterlegt werden. Solche Informationen können auch erst nachträglich in die Zuordnungstabelle 170 eingepflegt werden, insbesondere erst dann, wenn bekannt wird, welches Attribut 215 für die Bestimmung der Konfiguration 205 für eine vorbestimmte Aktualisierungsinformation 160 relevant ist.

Mittels eines Verfahrens 220, das insbesondere in Form eines Computerprogramms auf einer der Verarbeitungseinrichtungen 110 oder 145 ablaufen kann, kann überprüft werden, ob die bestehende Konfiguration 205 die Beschränkung 165 erfüllt, die den vorbestimmten Aktualisierungsinformationen 160 zugeordnet sind. Ist dies der Fall, so kann eine Zielkonfiguration 225 bestimmt werden, die das Hausgerät 105 nach dem Aktualisieren aufweisen soll. Die Zielkonfiguration 225 kann einen oder mehrere veränderte Zustände 210 umfassen. Ein Attribut 215 der bestehenden Konfiguration 205 kann durch das Aktualisieren üblicherweise nicht verändert werden, das unveränderte Attribut 225 kann jedoch von der Zielkonfiguration 225 umfasst sein. Vor der eigentlichen Aktualisierung kann die Zielkonfiguration 225 überprüft werden, beispielsweise durch eine Bedienperson. Dann können Programmteile, Informationen oder Parameter an Komponenten 110, 115, 120, 130 des Hausgeräts 105 aktualisiert werden.

Das eigentliche Aktualisieren kann ein Aufspielen von Informationen umfassen, die in unterschiedlichen Blöcken 230 der Aktualisierungsinformationen 160 abgelegt sein können. Eine Zuordnung eines oder mehrerer Blöcke 230 zu einer oder mehreren Komponenten 110, 115, 120 kann durch die erzeugte Zielkonfiguration 225 definiert oder auf eine andere Weise insbesondere mittels des Verfahrens 220 bestimmt werden. Eine exemplarische Zuordnung ist in Figur 2 mit Pfeilen angedeutet.

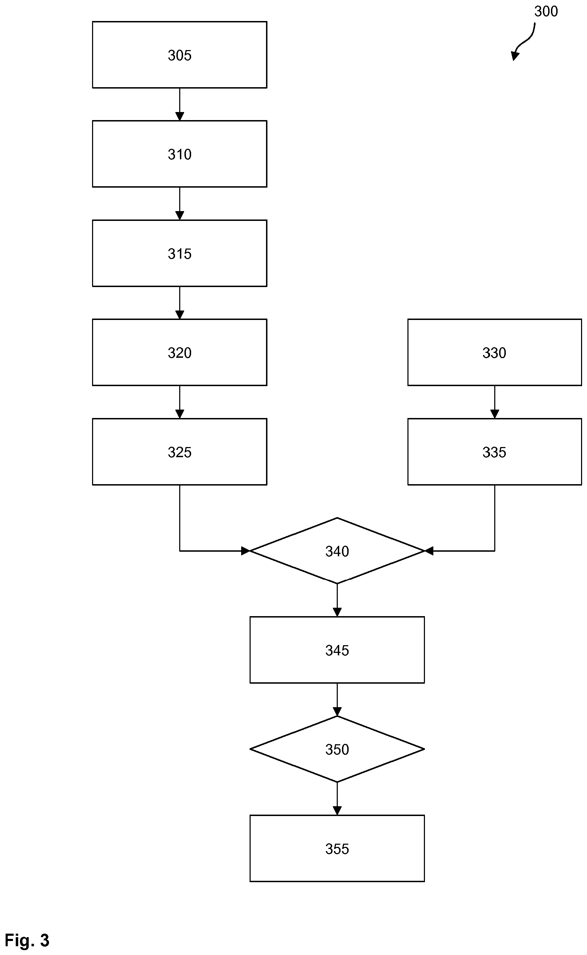

Figur 3 zeigt ein Ablaufdiagramm eines beispielhaften Verfahrens 300, das insbesondere einen Teil oder das gesamte Verfahren 220 von Figur 2 umfassen kann. Das Verfahren 300 kann insbesondere mittels der Verarbeitungseinrichtung 110 des Hausgeräts 105 durchgeführt werden. Ein Teil des Verfahrens 300 kann auch extern, insbesondere seitens der entfernten Stelle 108, durchgeführt werden.

In einem Schritt 305 können Komponenten 110 - 130 bestimmt werden, die im Hausgerät 105 angebracht sind. Dazu können bekannte aktive Komponenten 110, 115, 120, 130 mittels entsprechender Anfragen kontaktiert werden. Eine Komponente 110 - 130 kann Informationen über sich selbst und/oder über eine angeschlossene passive Komponente 125 bereitstellen. In einem Schritt 310 können Zustände 210 zumindest der aktiven unter den bestimmten Komponenten 115, 120 festgestellt werden. Ein Zustand 210 kann in Antwort auf eine entsprechende Anfrage von der jeweiligen aktiven Komponente 115, 120 bereitgestellt werden.

In einem Schritt 315 kann die Identifikation 175 des Hausgeräts 105 bestimmt werden. Die Identifikation 175 kann elektronisch auslesbar in einem dazu vorgesehenen Speicher abgelegt sein. Alternativ kann die Identifikation 175 auch von einem Benutzer bereitgestellt werden, beispielsweise mittels des Mobiltelefons 180. Die Identifikation 175 kann auf einer Außenseite des Hausgeräts 105 lesbar angebracht sein. Auf der Basis der Identifikation 175 kann ein Attribut 215 einer Komponente 110 - 130 bestimmt werden, wie oben genauer ausgeführt ist. Die gesammelten Zustände 210 und Attribute 215 können in einem Schritt 325 zur Bestimmung der Konfiguration 205 verwendet werden.

In einem Schritt 330 können Aktualisierungsinformationen 160 bereitgestellt werden. Die Aktualisierungsinformationen 160 werden üblicherweise von der entfernten Stelle über die Verbindung 140 an das Hausgerät 105 heruntergeladen; andere Beschaffungswege, beispielsweise mithilfe eines Datenträgers, sind jedoch auch möglich. In einem Schritt 335 kann die Beschränkung 165 bestimmt werden, die den Aktualisierungsinformationen 160 zugeordnet ist. Die Schritte 330, 335 können nebenläufig zu den Schritten 305 - 325 ausgeführt werden. In einer Ausführungsform kann die Beschränkung 165 bereitgestellt werden, bevor auf ihrer Basis die Konfiguration 205 in den Schritten 305 - 325 bestimmt wird. Irrelevante Zustände 210 oder Attribute 215 können so unbestimmt bleiben.

In einem Schritt 340 kann bestimmt werden, ob die bestimmte Konfiguration 205 die Beschränkung 165 erfüllt. Ist dies der Fall, so kann in einem Schritt 345 die Zielkonfiguration 225 erstellt werden. Eine Zustimmung zur Zielkonfiguration 225 kann in einem Schritt 350 erfasst werden und in einem Schritt 355 können die Aktualisierungsinformationen 160 auf das Hausgerät 105 und seine Komponenten 110 - 130 angewandt werden.

### Bezugszeichen

- 100: System
- 105: Hausgerät
- 108: entfernte Stelle
- 110: Verarbeitungseinrichtung
- 115: aktive Komponente
- 120: aktive Komponente
- 125: passive Komponente
- 130: Kommunikationseinrichtung
- 135: Kommunikationseinrichtung
- 140: Verbindung
- 145: Verarbeitungseinrichtung
- 150: erster Datenspeicher
- 155: zweiter Datenspeicher
- 160: Aktualisierungsinformationen
- 165: Beschränkung
- 170: Zuordnungstabelle
- 175: Identifikation
- 180: Gerät
- 200: Aktualisierungsvorgang
- 205: bestehende Konfiguration
- 210: Zustand
- 215: Attribut
- 220: Verfahren (Update-Programm)
- 225: Zielkonfiguration
- 230: Block
- 300: Verfahren
- 305: Bestimmen Komponenten
- 310: Bestimmen Zustände der Komponenten
- 315: Bestimmen Identifikation
- 320: Bestimmen Attribut
- 325: Bestimmen Konfiguration
- 330: Bereitstellen Aktualisierungsinformationen
- 335: Bereitstellen Beschränkung
- 340: Übereinstimmung?
- 345: Bereitstellen Zielkonfiguration
- 350: Zustimmung?
- 355: Aktualisieren Steuerinformationen

## Patentansprüche

1. Verfahren (300) zum Aktualisieren eines Hausgeräts (105), wobei das Verfahren (300) folgende Schritte umfasst:
- Bestimmen (325) einer Konfiguration (205) des Hausgeräts (105), wobei die Konfiguration (205) einen Zustand (210) wenigstens einer Komponente (115-125) des Hausgeräts (105) betrifft;
- Bestimmen (335) einer Beschränkung (165), die vorbestimmten Aktualisierungsinformationen (160) für Hausgeräte (105) zugeordnet sind, die das Hausgerät (105) umfassen;
- Aktualisieren (355) von Steuerinformationen wenigstens einer Komponente (115-125) des Hausgeräts (105) auf der Basis der Aktualisierungsinformationen (160), falls die Konfiguration (205) des Hausgeräts (105) die Beschränkung (165) erfüllt;
**dadurch gekennzeichnet, dass**
- die Konfiguration (205) ein Attribut (215) einer Komponente (115-125) des Hausgeräts (105) umfasst; und
- das Attribut (215) mittels eines Update-Servers (108) auf der Basis einer Identifikation
(175) des Hausgeräts (105) und einer Zuordnung der Identifikation (175) zu dem Attribut (215) bestimmt wird, wobei der Update-Server einen ersten Datenspeicher (150) zur Ablage der Identifikation (175) des Hausgeräts (105) und des der Identifikation (175) zugeordneten Attributs (215) umfasst.

2. Verfahren (300) nach Anspruch 1, wobei die Beschränkung (165) eine Vielzahl Konfigurationen (205) umfasst.

3. Verfahren (300) nach Anspruch 1 oder 2, wobei das Attribut (215) von keiner Komponente (115-125) des Hausgeräts (105) dynamisch bestimmt werden kann.

4. Verfahren (300) nach einem der vorangehenden Ansprüche, wobei das Attribut (215) eine Existenz, eine Variante, ein Baumuster, eine Ausführungsform oder eine Fähigkeit einer Komponente (115-125) des Hausgeräts (105) umfasst.

5. Verfahren (300) nach einem der vorangehenden Ansprüche, wobei das der Identifikation (175) zugeordnete Attribut (215) geändert werden kann.

6. Verfahren (300) nach einem der vorangehenden Ansprüche, wobei der Zustand (210) eine Existenz, Ausführung, Einstellung oder Version von Steuerinformationen der Komponente (115-125) umfasst.

7. Verfahren (300) nach einem der vorangehenden Ansprüche, wobei die Aktualisierungsinformationen (160) ein Anwendungsprogramm für eine Komponente (115-125) des Hausgeräts (105) umfassen.

8. Verfahren (300) nach einem der vorangehenden Ansprüche, wobei die Aktualisierungsinformationen (160) ein eingebettetes Programm einer Komponente (115-125) des Hausgeräts (105) umfassen.

9. Steuereinrichtung für ein Hausgerät (105) mit einer oder mehreren Komponenten (115-125), wobei die Steuereinrichtung folgendes umfasst:
- eine Kommunikationseinrichtung, die zum Empfangen von Aktualisierungsinformationen (160) eingerichtet ist; und
- eine Verarbeitungseinrichtung (110), die dazu eingerichtet ist, auf der Basis einer Identifikation (175) des Hausgeräts (105) ein Attribut (215) wenigstens einer der Komponenten (115-125) mittels eines Update-Servers (108) zu bestimmen; wobei der Update-Server einen ersten Datenspeicher (150) zur Ablage der Identifikation (175) des Hausgeräts (105) und des der Identifikation (175) zugeordneten Attributs (215) umfasst und das Attribut (215) mittels des Update-Servers auf der Basis der Identifikation (175) des Hausgeräts (105) und der Zuordnung der Identifikation (175) zu dem Attribut (215) bestimmt wird;
- wobei die Verarbeitungseinrichtung (110) weiterhin dazu eingerichtet ist,
∘ auf der Basis des Attributs (215) und eines Zustands (210) wenigstens einer der Komponenten (115-125) eine Konfiguration (205) des Hausgeräts (105) zu bestimmen; und
∘ Steuerinformationen wenigstens einer der Komponenten (115-125) auf der Basis der Aktualisierungsinformationen (160) zu aktualisieren, falls die Konfiguration (205) des Hausgeräts (105) eine vorbestimmte Beschränkung (165) erfüllt, die den Aktualisierungsinformationen (160) zugeordnet ist.

10. Update-Server (108), folgende Elemente umfassend:
- eine Kommunikationseinrichtung (135);
- einen ersten Datenspeicher (150) zur Ablage einer Identifikation (175) eines Hausgeräts (105) und eines der Identifikation (175) zugeordneten Attributs (215);
- einen zweiten Datenspeicher (155) zur Ablage von Aktualisierungsinformationen (160); und
- eine Verarbeitungseinrichtung (145), die dazu eingerichtet ist, auf der Basis einer mittels der Kommunikationseinrichtung (135) empfangenen Identifikation (175) eines Hausgeräts (105) ein zugeordnetes Attribut (215) zu bestimmen; und
- abgelegte Aktualisierungsinformationen (160) für das Hausgerät (105) bereitzustellen, falls eine Konfiguration (205) des Hausgeräts (105), die das bestimmte Attribut (215) und den Zustand (210) wenigstens einer Komponente (115-125) des Hausgeräts (105) umfasst, eine Beschränkung (165) erfüllt, die den Aktualisierungsinformationen (160) zugeordnet ist.

11. Update-Server (108) nach Anspruch 10, wobei die Verarbeitungseinrichtung (145) dazu eingerichtet ist, die Konfiguration (205) zu bestimmen.

## Claims

1. Method (300) for updating a household appliance (105), wherein the method (300) comprises the following steps:
- determining (325) a configuration (205) of the household appliance (105), wherein the configuration (205) relates to a state (210) of at least one component (115-125) of the household appliance (105);
- determining (335) a restriction (165) assigned to predetermined update information (160) for household appliances (105), which comprise the household appliance (105);
- updating (355) control information of at least one component (115-125) of the household appliance (105) based on the update information (160) if the configuration (205) of the household appliance (105) fulfils the restriction (165);
**characterised in that**
- the configuration (205) comprises an attribute (215) of a component (115-125) of the household appliance (105); and
- the attribute (215) is determined by means of an update server (108) on the basis of an identification (175) of the household appliance (105) and assignment of the identification (175) to the attribute (215), wherein the update server comprises a first data memory (150) for storing the identification (175) of the household appliance (105) and an attribute (215) assigned to the identification (175) .

2. Method (300) according to claim 1, wherein the restriction (165) comprises a plurality of configurations (205).

3. Method (300) according to claim 1 or 2, wherein the attribute (215) cannot be determined dynamically by any component (115-125) of the household appliance (105).

4. Method (300) according to one of the preceding claims, wherein the attribute (215) comprises an existence, a variant, a design, an embodiment, or a capability of a component (115-125) of the household appliance (105).

5. Method (300) according to one of the preceding claims, wherein the attribute (215) assigned to the identification (175) can be changed.

6. Method (300) according to one of the preceding claims, wherein the state (210) comprises an existence, embodiment, setting or version of control information of the component (115-125).

7. Method (300) according to one of the preceding claims, wherein the update information (160) comprises an application program for a component (115-125) of the household appliance (105).

8. Method (300) according to one of the preceding claims, wherein the update information (160) comprises an embedded program of a component (115-125) of the household appliance (105).

9. Control facility for a household appliance (105) with one or more components (115-125), wherein the control facility comprises the following:
- a communication facility which is designed to receive update information (160); and
- a processing facility (110) which is designed to determine an attribute (215) of at least one of the components (115-125) by means of an update server (108) on the basis of an identification (175) of the household appliance (105); wherein the
update server comprises a first data memory (150) for storing the identification (175) of the household appliance (105) and the attribute (215) assigned to the identification (175) and the attribute (215) is determined by means of the update server on the basis of the identification (175) of the household appliance (105) and the assignment of the identification (175) to the attribute (215);
- wherein the processing facility (110) is further designed
• to determine a configuration (205) of the household appliance (105) on the basis of the attribute (215) and a state (210) of at least one of the components (115-125); and
• to update control information of at least one of the components (115-125) on the basis of the update information (160) if the configuration (205) of the household appliance (105) fulfils a predetermined restriction (165) which is assigned to the update information (160).

10. Update server (108) comprising the following elements:
- a communication facility (135);
- a first data memory (150) for storing an identification (175) of a household appliance (105) and an attribute (215) assigned to the identification (175);
- a second data memory (155) for storing update information (160); and
- a processing facility (145), which is designed to determine an assigned attribute (215) on the basis of an identification (175) of a household appliance (105) received by means of the communication facility (135); and
- to provide stored update information (160) for the household appliance (105) if a configuration (205) of the household appliance (105), which comprises the particular attribute (215) and the state (210) of at least one component (115-125) of the household appliance (105), meets a restriction (165) which is assigned to the update information (160).

11. Update server (108) according to claim 10, wherein the processing facility (145) is designed to determine the configuration (205).

## Revendications

1. Procédé (300) pour la mise à jour d'un appareil ménager (105), dans lequel le procédé (300) comprend les étapes suivantes :
- détermination (325) d'une configuration (205) de l'appareil ménager (105), la configuration (205) concernant un état (210) d'au moins un composant (115-125) de l'appareil ménager (105) ;
- détermination (335) d'une limitation (165), à laquelle sont affectées des informations de mise à jour prédéterminées (160) pour appareils ménagers (105), lesquelles comprennent l'appareil ménager (105) ;
- mise à jour (355) d'informations de commande d'au moins un composant (115-125) de l'appareil ménager (105) sur la base des informations de mise à jour (160), dans l'hypothèse où la configuration (205) de l'appareil ménager (105) vérifie la limitation (165) ; **caractérisé en ce que**
- la configuration (205) comprend un attribut (215) d'un composant (115-125) de l'appareil ménager (105) ; et
- l'attribut (215) est déterminé au moyen d'un serveur de mise à jour (108) sur la base d'une identification (175) de l'appareil ménager (105) et d'une affectation de l'identification (175) à l'attribut (215), dans lequel le serveur de mise à jour comprend une première mémoire de données (150) pour l'archivage de l'identification (175) de l'appareil ménager (105) et de l'attribut (215) affecté à l'identification (175).

2. Procédé (300) selon la revendication 1, dans lequel la limitation (165) comprend une pluralité de configurations (205).

3. Procédé (300) selon la revendication 1 ou 2, dans lequel l'attribut (215) ne peut être déterminé de façon dynamique par aucun composant (115-125) de l'appareil ménager (105).

4. Procédé (300) selon l'une des revendications précédentes, dans lequel l'attribut (215) comprend une existence, une variante, un type, une forme d'exécution ou une aptitude d'un composant (115-125) de l'appareil ménager (105).

5. Procédé (300) selon l'une des revendications précédentes, dans lequel l'attribut (215) affecté à l'identification (175) peut être modifié.

6. Procédé (300) selon l'une des revendications précédentes, dans lequel l'état (210) comprend une existence, une exécution, un réglage ou une version d'informations de commande des composants (115-125).

7. Procédé (300) selon l'une des revendications précédentes, dans lequel les informations de mise à jour (160) comprennent un programme d'application pour un composant (115-125) de l'appareil ménager (105).

8. Procédé (300) selon l'une des revendications précédentes, dans lequel les informations de mise à jour (160) comprennent un programme intégré d'un composant (115-125) de l'appareil ménager (105).

9. Dispositif de commande pour un appareil ménager (105) avec un ou plusieurs composants (115-125), dans lequel le dispositif de commande comprend les éléments suivants :
- un dispositif de communication aménagé pour la réception d'informations de mise à jour (160) ; et
- un dispositif de traitement (110) aménagé afin de déterminer, sur la base d'une identification (175) de l'appareil ménager (105), un attribut (215) d'au moins un des composants (115-125) au moyen d'un serveur de mise à jour (108) ; dans lequel le serveur de mise à jour comprend une première mémoire de données (150) pour l'archivage de l'identification (175) de l'appareil ménager (105) et de l'attribut (215) affecté à l'identification (175) et l'attribut (215) est déterminé au moyen du serveur de mise à jour sur la base de l'identification (175) de l'appareil ménager (105) et de l'affectation de l'identification (175) à l'attribut (215) ;
- dans lequel le dispositif de traitement (110) est en outre aménagé
∘ afin de déterminer sur la base de l'attribut (215) et d'un état (210) d'au moins un des composants (115-125) une configuration (205) de l'appareil ménager (105) ; et
∘ afin de mettre à jour les informations de commande d'au moins un des composants (115-125) sur la base des informations de mise à jour (160), dans l'hypothèse où la configuration (205) de l'appareil ménager (105) vérifie une limitation prédéterminée (165) affectée aux informations de mise à jour (160).

10. Serveur de mise à jour (108) comprenant les éléments suivants :
- un dispositif de communication (135) ;
- une première mémoire de données (150) pour l'archivage d'une identification (175) d'un appareil ménager (105) et d'un attribut (215) affecté à l'identification (175) ;
- une deuxième mémoire de données (155) pour l'archivage d'informations d'actualisation (160) ; et
- un dispositif de traitement (145) aménagé afin de déterminer, sur la base d'une identification (175) d'un appareil ménager (105) reçue au moyen du dispositif de communication (135) un attribut (215) affecté ; et
- la mise à disposition d'informations de mise à jour archivées (160) pour l'appareil ménager (105), dans l'hypothèse où une configuration (205) de l'appareil ménager (105), qui comprend l'attribut déterminé (215) et l'état (210) d'au moins un composant (115-125) de l'appareil ménager (105), vérifie une limitation (165) affectée aux informations de mise à jour (160).

11. Serveur de mise à jour (108) selon la revendication 10, dans lequel le dispositif de traitement (145) est aménagé afin de déterminer la configuration (205).
